# FASCICULE DE BREVET EUROPEEN

(11) **EP 3 366 940 B1**
(45) Date de publication et mention de la délivrance du brevet: **24.07.2019**
(21) Numéro de dépôt: 18157497.1
(22) Date de dépôt: 19.02.2018
(51) Int. Cl.: F16D 13/64, F16D 13/68

(54) **DISQUE D EMBRAYAGE**
KUPPLUNGSSCHEIBE
CLUTCH DISC

(30) Priorité: 27.02.2017 FR 1751563
(43) Date de publication de la demande: 29.08.2018
(73) Titulaire: Valeo Embrayages, 80009 Amiens cedex 2 (FR)
(72) Inventeur: MARECHAL, Olivier, 80009 AMIENS (FR); BRAILLY, Julien, 80009 AMIENS (FR)
(74) Mandataire: Vincent, Catherine Marie Marguerite

(56) Documents cités:
- WO-A1-01/86162
- DE-A1- 4 336 178
- DE-U1- 29 924 341
- FR-A1- 2 517 006

## Description

### Domaine technique

L'invention se rapporte au domaine des dispositifs d'embrayage pour véhicule automobile et se rapporte plus particulièrement à un disque d'embrayage.

### Arrière-plan technologique

Un dispositif d'embrayage permet un accouplement entre un arbre menant, tel qu'un vilebrequin d'un moteur thermique, et un arbre mené, tel qu'un arbre d'entrée d'une boîte de vitesses. Un dispositif d'embrayage est généralement équipé d'un disque d'embrayage comportant des garnitures de friction destinées à être pincées entre un plateau de pression mobile et un plateau de réaction, solidaires en rotation de l'arbre menant. Le disque d'embrayage comporte en outre un moyeu destiné à être solidarisé en rotation à l'arbre mené.

Le document FR2808850 et le document WO 01/86162 divulguent chacun un disque d'embrayage qui comporte un support annulaire portant des garnitures de friction, un voile annulaire solidaire du support et un moyeu qui est apte à être solidarisé en rotation avec un arbre mené et qui comprend une denture externe engrenant avec une denture interne du voile annulaire. Le moyeu comporte une collerette en saillie vers l'extérieur. Le support annulaire s'étend radialement vers l'intérieur jusqu'à la collerette et est fixé au voile annulaire de manière à pincer la collerette entre le disque de support et le voile annulaire et retenir ainsi axialement les garnitures de friction et le voile annulaire au moyeu. Le support annulaire et la collerette coopèrent l'un avec l'autre via des surfaces tronconiques. En outre, la surface tronconique du support annulaire est apte à se déformer élastiquement, ce qui autorise un basculement du voile annulaire par rapport au moyeu et permet ainsi de compenser les défauts d'alignement entre l'arbre menant et l'arbre mené, lors d'une opération d'embrayage.

Toutefois, pour certaines applications, un tel disque d'embrayage n'est pas pleinement satisfaisant. En particulier, la structure du disque d'embrayage précité impose que la portion interne du support annulaire, c'est-à-dire la portion qui est en appui contre la collerette, s'étende sensiblement dans le même plan que la portion externe du support annulaire, c'est-à-dire la portion qui supporte les garnitures de friction. Or, dans certaines applications particulières, une telle structure n'est pas compatible avec la géométrie de l'espace disponible pour le logement du disque d'embrayage.

### Résumé

L'invention a notamment pour but de remédier aux inconvénients précités, en fournissant un disque d'embrayage qui soit simple et peu coûteux à fabriquer et qui présente une structure lui permettant de s'adapter à des contraintes géométriques particulières.

Selon un mode de réalisation, l'invention fournit un disque d'embrayage comportant :
- un moyeu ayant un axe central X, apte à être solidarisé en rotation à un arbre mené, le moyeu comportant une périphérie externe présentant un élément en saillie dirigé radialement vers l'extérieur ;
- un voile annulaire qui est solidaire en rotation du moyeu et qui présente une portion interne en appui contre l'élément en saillie ;
- des garnitures de friction fixées sur une portion externe d'un support annulaire ; ledit support annulaire étant fixé au voile annulaire ;
- un flasque de fixation qui présente une portion interne en appui contre l'élément en saillie, le flasque de fixation et le voile annulaire étant disposés de part et d'autre de l'élément en saillie et solidarisés l'un à l'autre de manière à pincer l'élément en saillie entre les portions internes respectives du flasque de fixation et du voile annulaire et retenir ainsi axialement le voile annulaire au moyeu ;
- la portion externe du support annulaire étant espacée axialement de la portion interne du flasque de fixation ;
- le support annulaire et le flasque de fixation étant au moins en partie formés d'une seule pièce monobloc ou formés de deux pièces distinctes présentant respectivement un contour interne et un contour externe qui présentent des formes telles que, dans un état désassemblé du disque d'embrayage, le support annulaire et le flasque de fixation soient aptes à être positionnés dans une position relative dans laquelle le contour externe du flasque de fixation se situe radialement à l'intérieur du contour interne du support annulaire ;
- un ou plusieurs éléments d'entretoisement disposés axialement entre le support annulaire et le flasque de fixation de manière à les espacer axialement.

Ainsi, de tels éléments d'entretoisement assurent le maintien de l'écartement axial entre le flasque de fixation et le support annulaire.

Ainsi, la portion externe du support annulaire étant espacée axialement de la portion interne du flasque de fixation, le disque d'embrayage est apte à s'adapter à certaines applications particulières dans lesquelles d'autres éléments de la chaîne de transmission, tels que des éléments pour l'actionnement du dispositif d'embrayage par exemple, sont susceptibles d'occuper un espace radial à l'intérieur de garnitures de friction.

En outre, la réalisation du disque d'embrayage est économique car, soit le flasque de fixation et le support annulaire sont formés au moins en partie d'un seul tenant, soit le flasque de fixation et le support annulaire sont géométriquement insérables l'un de l'autre, ce qui permet de les réaliser dans une même tôle, en limitant les pertes de matière.

Selon d'autres modes de réalisation avantageux, un tel disque d'embrayage peut présenter une ou plusieurs des caractéristiques suivantes.

Selon un mode de réalisation, le contour interne du support annulaire et le contour externe du flasque de fixation présentent des formes complémentaires. Ainsi, la fabrication du disque d'assemblage est particulièrement simple puisque le contour externe du flasque de fixation et le contour interne du flasque de fixation sont réalisées simultanément lors d'une même opération de découpe.

Selon un mode de réalisation, le support annulaire et le flasque de fixation sont issus d'une même tôle.

Selon un mode de réalisation, le support annulaire et le flasque de fixation sont intégralement formés d'une seule pièce monobloc.

Selon un mode de réalisation, le voile annulaire forme un élément d'entretoisement disposé entre le support annulaire et le flasque de fixation. Ainsi, le support annulaire et le flasque de fixation étant disposés axialement de part et d'autre du voile annulaire, la fonction de maintien de l'écartement axial entre le flasque de fixation et le support annulaire est réalisée simplement, sans élément additionnel.

Selon un mode de réalisation, le support annulaire est fixé au voile annulaire par une pluralité d'organes de fixations.

Selon un mode de réalisation, chaque organe de fixation comporte une portion intermédiaire formant un élément d'entretoisement disposé axialement entre le support annulaire et le flasque de fixation. Ainsi, la fonction de maintien de l'écartement axial entre le flasque de fixation et le support annulaire est réalisée simplement, sans élément additionnel.

Selon un mode de réalisation, les organes de fixation sont des rivets comportant chacun deux tiges faisant saillie axialement de la portion intermédiaire et passant respectivement au travers d'un trou ménagé dans le voile annulaire et d'un trou ménagé dans le support annulaire, chaque tige comportant une extrémité opposée à la portion intermédiaire ayant une tête, par exemple sertie, la tête ayant une section plus grande que le trou dans lequel passe la tige correspondante de façon à maintenir axialement le voile et le support annulaire, chacun entre l'une des têtes et la portion intermédiaire.

Selon un premier mode de réalisation, le voile annulaire et les portions intermédiaires des organes de fixation sont disposés axialement entre le support annulaire et le flasque de fixation. Dans un tel mode de réalisation, il est possible d'espacer encore davantage le flasque de fixation du support annulaire.

Dans un deuxième mode de réalisation, seules les portions intermédiaires des organes de fixation sont disposées axialement entre le support annulaire et le flasque de fixation.

Dans un troisième mode de réalisation, seul le voile annulaire est disposé axialement entre le support annulaire et le flasque de fixation.

Selon un premier mode de de réalisation, le support annulaire et le flasque de fixation sont deux pièces distinctes et présentent respectivement un contour interne et un contour externe qui présentent des formes telles que, dans un état désassemblé du disque d'embrayage, le support annulaire et le flasque de fixation soient aptes à être positionnés dans une position relative dans laquelle le contour externe du flasque de fixation se situe radialement à l'intérieur du contour interne du support annulaire et dans lequel le flasque de fixation est fixé au support annulaire par les organes de fixation assurant la fixation du support annulaire au voile annulaire. Ainsi, le flasque est lui aussi fixé au voile. Le flasque de fixation et le support annulaire étant fixés au voile annulaire par des organes de fixation communs, cela permet de limiter le nombre de composants du disque d'embrayage.

Selon un mode de réalisation, le contour interne du support annulaire et le contour externe du flasque de fixation présentent chacun une alternance de portions en saillie radialement et de renfoncement radiaux, les portions en saillie du support annulaire et du flasque de fixation étant chacune équipées d'un trou de passage de l'un des organes de fixation, chaque organe de fixation traversant le trou de l'une des portions en saillie du support annulaire, le trou de l'une des portions en saillie du flasque de fixation et un trou ménagé dans le voile annulaire. Ainsi le flasque et le support annulaire peuvent etre fixés l'un à l'autre tout en permettant, lors de la fabrication, de découper le flasque à l'intérieur du support annulaire.

Selon un mode de réalisation, le support annulaire et le flasque de fixation sont au moins en partie formés d'une seule pièce monobloc, le support annulaire et le flasque de fixation étant reliés l'un à l'autre par l'intermédiaire d'une pluralité de bras de liaison qui sont venus de matière avec au moins une partie du flasque de fixation et une partie du support annulaire et qui sont régulièrement répartis autour de l'axe X et séparés les uns des autres par des fenêtres, lesdits bras de liaison étant pliés d'une manière telle que le support annulaire est espacé axialement du flasque de fixation. Un tel agencement autorise le support annulaire et le flasque de fixation à être formés d'un seul tenant tout en étant espacés axialement l'un de l'autre.

Selon un mode de réalisation, chaque élément d'entretoisement est disposé dans une fenêtre entre deux bras adjacents pour espacer axialement le support annulaire du flasque.

Selon un mode de réalisation, le support annulaire comporte une pluralité de pattes de fixation qui s'étendent chacune radialement vers l'intérieur, en regard de l'une des fenêtres, chacune des pattes de fixation étant fixée au voile annulaire par l'un des organes de fixation. Un tel agencement permet d'assurer un positionnement axial précis du support annulaire et par conséquent des garnitures de friction. De préférence, les pattes de fixation s'étendent dans le plan du support annulaire.

Selon un mode de réalisation, l'élément d'entretoisement est fixé à la patte de fixation du support annulaire pour espacer axialement le support annulaire du flasque de fixation.

Selon un mode de réalisation, le voile annulaire comporte une pluralité de pattes de fixation qui font saillie radialement vers l'extérieur, sont chacune introduites dans l'une des fenêtres et sont chacune fixées à l'une des pattes de fixation respective du support annulaire par l'un des organes de fixation.. Un tel agencement permet à la pièce monobloc formant le support annulaire et le flasque de fixation d'être fixée au voile annulaire tout en permettant au support annulaire et au flasque de fixation d'être disposés axialement de part et d'autre du voile annulaire. En ménageant des pattes radialement à l'extérieur du voile, il est possible de déformer axialement les bras de liaison entre deux pattes adjacentes. Ainsi, les dimensions radiales des pattes du voile permettent d'adapter l'inclinaison des bras en fonction du matériau utilisé.

Selon un mode de réalisation, chaque fenêtre et chaque patte de fixation du support annulaire comportent un bord radialement interne; le bord radialement interne de la fenêtre étant plus proche de l'axe X que le bord radialement interne de la patte de fixation du support annulaire. Ainsi, le flasque et le support annulaire peuvent être réalisés à partir d'une même pièce de tôle découpée.

Selon un mode de réalisation, le flasque de fixation est plaqué contre le voile annulaire avec un moyen de fixation, notamment au moyen d'un organe de fixation additionnel, tel qu'un rivet. Ceci peut être avantageux pour contraindre le flasque de fixation davantage afin qu'il exerce avec le voile un effort de serrage plus important sur l'élément en saillie.

Selon un mode de réalisation, l'élément en saillie est une collerette.

Selon un mode de réalisation, la portion externe du support annulaire est espacée axialement de la portion interne du flasque de fixation d'une manière telle qu'au moins l'une des garnitures de friction soit positionnée au moins en partie axialement au-delà d'une extrémité axiale du moyeu. Un tel agencement est particulièrement avantageux lorsque, en raison de l'encombrement d'autres éléments de la chaîne de transmission, le moyeu doit être légèrement décalé axialement par rapport aux garnitures de friction.

Selon un mode de réalisation, la portion externe du support annulaire est espacée axialement de la portion interne du flasque de fixation d'une manière telle que les garnitures de friction sont intégralement positionnées axialement au-delà d'une extrémité axiale du moyeu.

Selon un mode de réalisation, la portion interne du flasque de fixation présente une forme tronconique qui coopère avec une rampe de forme tronconique de l'élément en saillie, la portion interne du flasque de fixation étant contrainte contre la rampe de forme tronconique et étant apte à se déformer élastiquement de manière à autoriser un basculement du voile annulaire par rapport au moyeu autour d'un axe orthogonal à l'axe X. Ceci permet de compenser les défauts d'alignement entre l'arbre menant et l'arbre mené.

Selon un mode de réalisation, la portion interne du flasque de fixation comporte une pluralité d'orifices d'assouplissement.

Selon un mode de réalisation, le voile annulaire comporte une denture qui coopère avec une denture qui est ménagée sur la périphérie externe du moyeu et longe l'élément en saillie.

Selon un mode de réalisation, la denture est ménagée au niveau d'une extrémité axiale de la périphérie externe du moyeu.

Selon un mode de réalisation, le support annulaire est réalisé dans une tôle métallique.

Selon un mode de réalisation, le flasque de fixation est réalisé dans une tôle métallique.

Selon un mode de réalisation la tôle permettant la fabrication du flasque de fixation et du support annulaire est en acier à ressort, tel que l'acier CS67S par exemple. Selon un mode de réalisation, la tôle est avantageusement pré-traitée par un traitement thermique de trempe suivi d'un revenu.

### Brève description des figures

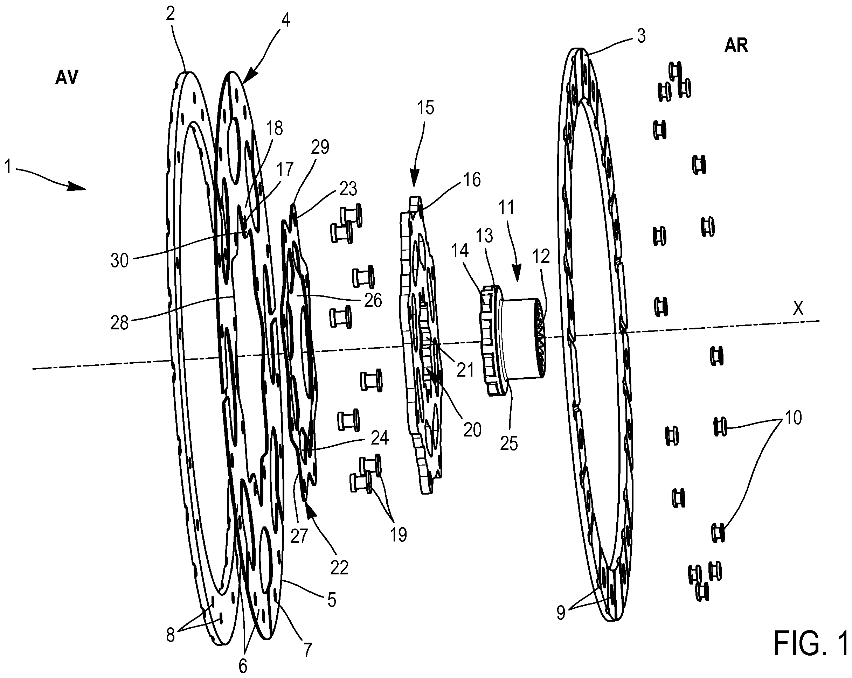

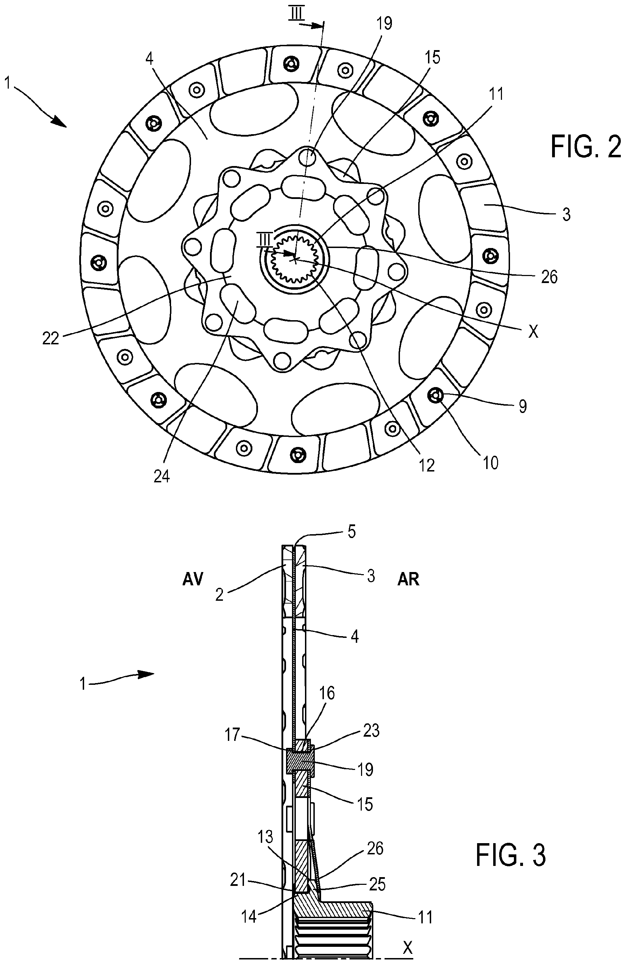

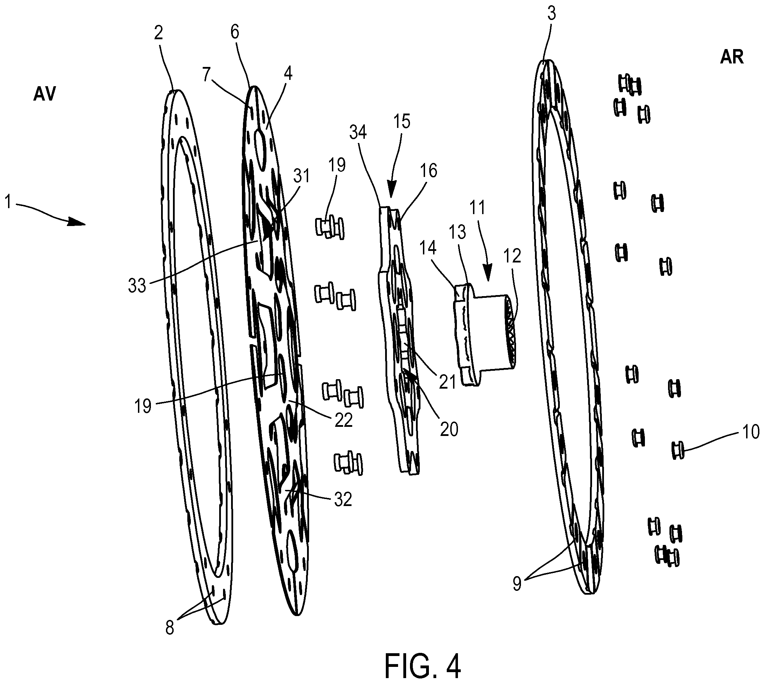

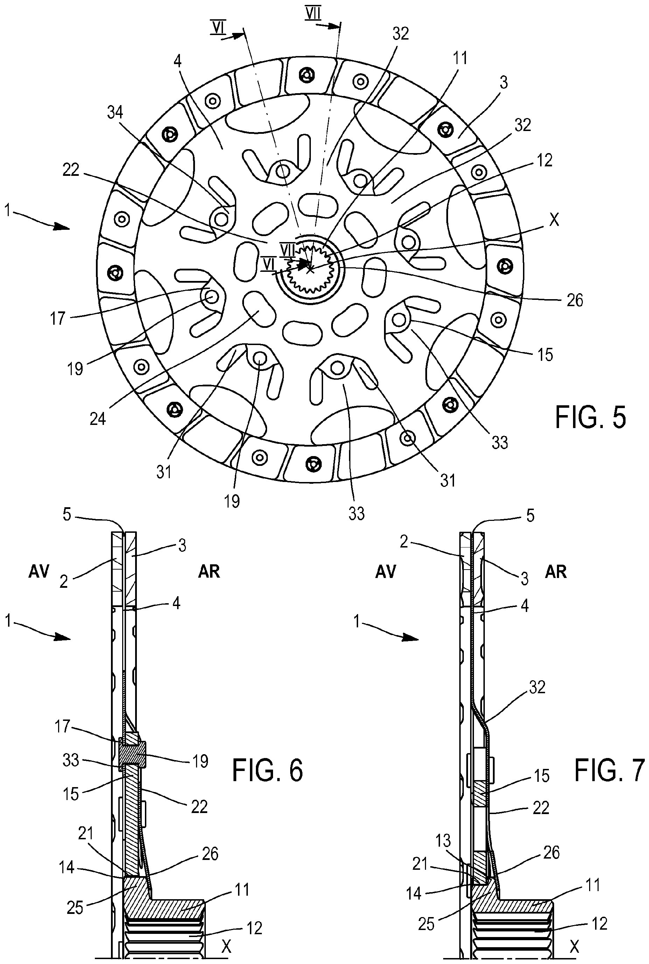

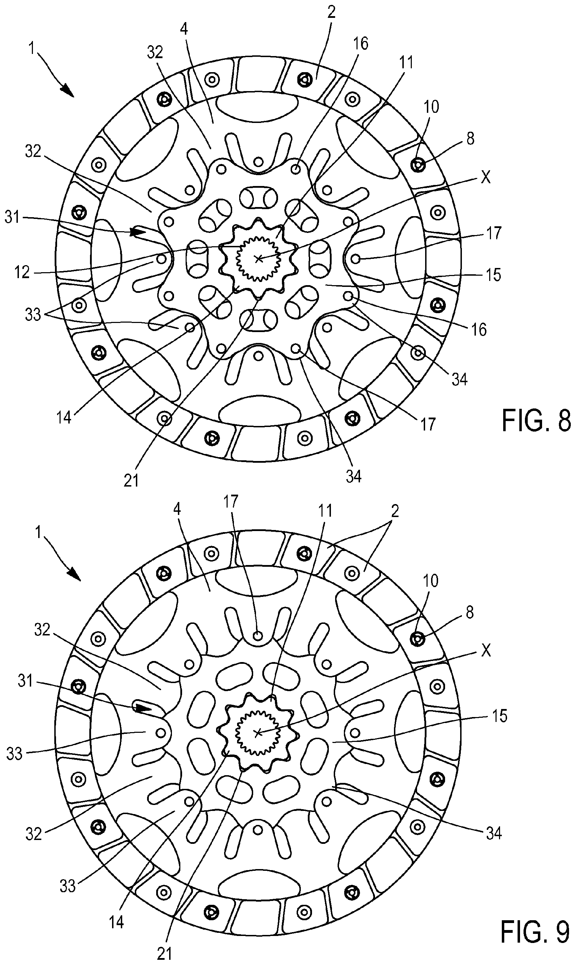

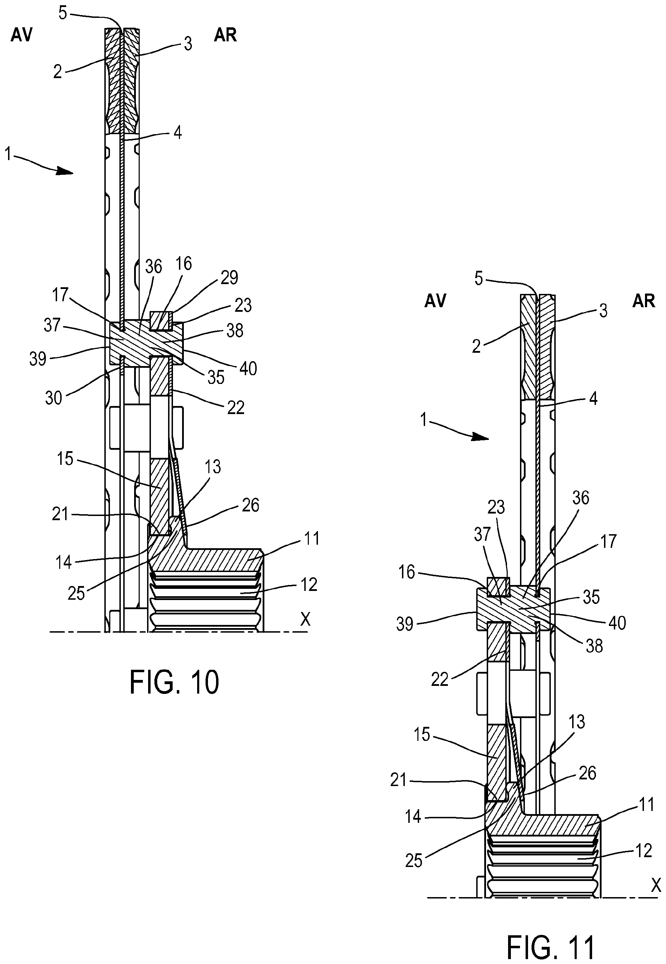

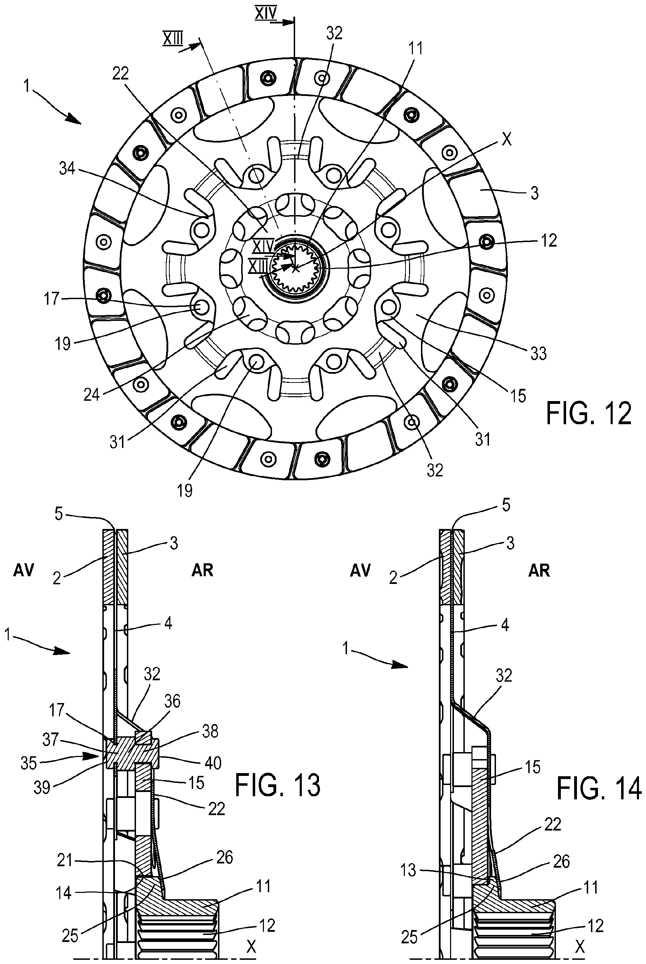

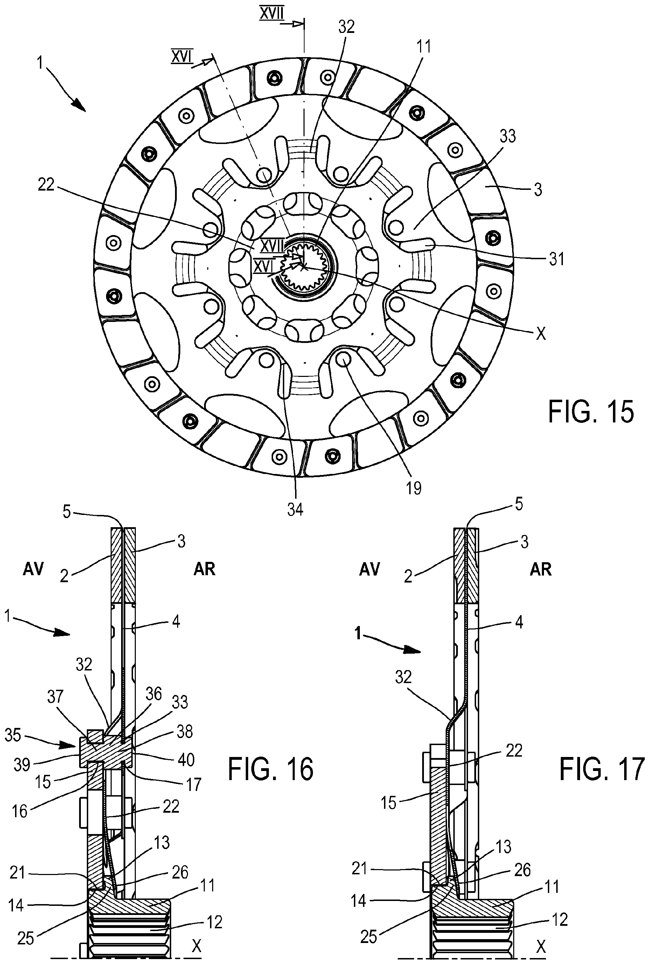

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** est une vue éclatée d'un disque d'embrayage selon un premier mode de réalisation.
- **La** **figure 2** est une vue arrière du disque d'embrayage de la figure 1.
- **La** **figure 3** est une demi-vue en coupe selon le plan III-III de la figure 2.
- **La** **figure 4** est une vue éclatée d'un disque d'embrayage selon un deuxième mode de réalisation.
- **La** **figure 5** est une vue arrière du disque d'embrayage de la figure 4.
- **La** **figure 6** est une demi-vue en coupe selon le plan VI-VI de la figure 5.
- **La** **figure 7** est une demi-vue en coupe selon le plan VII-VII de la figure 5.
- **La** **figure 8** est une vue avant du disque d'embrayage des figures 4 à 7 au cours d'une première étape d'assemblage.
- **La** **figure 9** est une vue avant du disque d'embrayage des figures 4 à 7 au cours d'une deuxième étape d'assemblage.
- **La** **figure 10** est une demi-vue en coupe d'un disque d'embrayage selon un troisième mode de réalisation.
- **La** **figure 11** est une demi-vue en coupe d'un disque d'embrayage selon un quatrième mode de réalisation.
- **La** **figure 12** est une vue arrière d'un disque d'embrayage selon un cinquième mode de réalisation.
- **La** **figure 13** est une demi-vue en coupe selon l'axe XIII-XIII de la figure 12.
- **La** **figure 14** est une demi-vue en coupe selon l'axe XIV-XIV de la figure 12.
- **La** **figure 15** est une vue arrière d'un disque d'embrayage selon un sixième mode de réalisation.
- **La** **figure 16** est une demi-vue en coupe selon l'axe XVI-XVI de la figure 15.
- **La** **figure 17** est une demi-vue en coupe selon l'axe XVII-XVII de la figure 15.

### Description détaillée de modes de réalisation

Dans la description et les revendications, on utilisera, les termes «externe» et «interne» ainsi que les orientations «axiale» et «radiale» pour désigner, selon les définitions données dans la description, des éléments du disque d'embrayage. Par convention, l'orientation «radiale» est dirigée orthogonalement à l'axe X de rotation du disque d'embrayage déterminant l'orientation «axiale» et, de l'intérieur vers l'extérieur en s'éloignant dudit axe, l'orientation «circonférentielle» est dirigée orthogonalement à l'axe X et orthogonalement à la direction radiale. Les termes «externe» et «interne» sont utilisés pour définir la position relative d'un élément par rapport à un autre, par référence à l'axe X de rotation du disque d'embrayage, un élément proche de l'axe est ainsi qualifié d'interne par opposition à un élément externe situé radialement en périphérie. Par ailleurs, les termes « arrière » AR et « avant » AV sont utilisés pour définir la position relative d'un élément par rapport à un autre selon la direction axiale.

Au sens du présent document, le terme « véhicule automobile » désigne tout véhicule comportant un moteur assurant la propulsion dudit véhicule. A titre d'exemple, compte-tenu de son faible encombrement, le disque d'embrayage peut, notamment être utilisé pour équiper un véhicule motorisé à deux roues, tel qu'une moto par exemple. Alternativement, un tel disque d'embrayage peut également équiper un véhicule à trois roues, quatre roues ou plus.

Le disque d'embrayage 1 est destiné à être monté solidaire en rotation d'un arbre mené, tel qu'un arbre d'entrée d'une boîte de vitesses, et à être disposé, dans une chaîne de transmission, entre un plateau de pression d'un embrayage et un plateau de réaction, solidaires en rotation d'un arbre menant, tel qu'un vilebrequin. Lors d'une opération d'embrayage, le plateau de pression serre les garnitures du disque d'embrayage contre le plateau de réaction de sorte à permettre une transmission de couple entre l'arbre menant et l'arbre mené.

En relation avec les figures 1 à 3, un disque d'embrayage 1 selon un premier mode de réalisation est décrit. Le disque d'embrayage 1 comporte deux garnitures de friction 2, 3 de forme annulaire, qui sont respectivement tournées vers l'avant et vers l'arrière et qui sont destinées à être serrées entre le plateau de pression et le plateau de réaction de l'embrayage, non représentés. Les garnitures de friction 2, 3 sont fixées sur une portion externe 5 d'un support annulaire 4.

Comme représenté sur la figure 1, le support annulaire 4 présente une pluralité des pâles 6. Les pâles 6 présentent des trous 7 qui sont alignés avec des trous 8, 9 ménagés dans les garnitures de friction 2, 3. Des rivets 10 passent au travers des trous 7 des pâles 6 et des trous 8, 9 des garnitures de friction 2, 3 de manière à fixer les garnitures de friction 2, 3 sur le support annulaire 4. Dans un mode de réalisation non représenté, les pâles 6 sont susceptibles d'assurer une fonction de progressivité, c'est-à-dire d'assurer une élasticité dans la direction axiale entre les deux garnitures de friction 2, 3. Dans ce cas, les pâles 6 sont alternativement décalées axialement vers l'avant et vers l'arrière par rapport à un plan médian, orthogonal à l'axe X ; les pâles 6 décalées vers l'avant étant fixées à la garniture de friction 2 avant tandis que les pâles 6 décalées vers l'arrière sont fixées à la garniture de friction 3 arrière.

Le disque d'embrayage 1 comporte également un moyeu 11 d'axe central X qui est apte à être solidarisé en rotation à un arbre mené, non représenté. Pour ce faire, le moyeu 11 présente des cannelures 12 longitudinales qui sont ménagées sur la surface interne du moyeu 11 et qui sont destinées à coopérer avec des cannelures complémentaires ménagées sur l'arbre mené. Par ailleurs, le moyeu 11 présente une collerette 13 faisant saillie radialement vers l'extérieur depuis la périphérie externe du moyeu 11. Le moyeu 11 comporte en outre une denture 14 qui est ménagée tout autour de l'axe X sur la périphérie externe du moyeu et qui longe la collerette 13. Dans le mode de réalisation représenté, la denture 14 est ménagée au niveau d'une extrémité axiale du moyeu 11.En outre, les sommets de la denture 14, c'est-à-dire les surfaces radialement extérieures de la denture 14, s'étendent dans le prolongement axial de la collerette 13.

Par ailleurs, le disque d'embrayage 1 comporte également un voile annulaire 15 rigide qui est destiné à assurer la transmission du couple entre les garnitures de friction 2, 3 et le moyeu 11. Pour ce faire, le voile annulaire 15 est d'une part fixé au support annulaire 4 et d'autre part solidaire en rotation du moyeu 11. Aussi, le voile annulaire 4 présente des trous 16 qui sont ménagés en regard de trous 17 ménagés dans la portion interne 18 du support annulaire 4. Des organes de fixation, tels que des rivets 19, sont insérés au travers des trous 16, 17 du support annulaire 4 et du voile annulaire 15 de manière à fixer le support annulaire 4 et le voile annulaire 15 l'un à l'autre. Le support annulaire 4 est ici fixé contre la face avant du voile annulaire 15. Ainsi, comme représenté sur la figure 3, la garniture de friction 2 avant fait saillie vers l'avant au-delà de l'extrémité avant du moyeu 11. Ceci est particulièrement avantageux lorsque le disque d'embrayage 1 est destiné à une chaîne transmission dans laquelle, en raison de l'encombrement d'autres éléments de la chaîne de transmission disposés en regard de l'extrémité avant du moyeu 11, tels que des éléments pour l'actionnement du dispositif d'embrayage par exemple, le moyeu 11 doit être légèrement décalé vers l'arrière par rapport aux garnitures de friction 2, 3.

Par ailleurs, le voile annulaire 15 présente un orifice central 20 qui lui permet d'être enfilé sur le moyeu 11. En outre, le voile annulaire 15 présente une denture 21 interne, qui borde ledit orifice central 20 et qui est apte à engrener avec la denture 14 ménagée sur la périphérie externe du moyeu 11. La denture 21 du voile annulaire 15 ainsi que la denture 14 ménagée sur la périphérie externe du moyeu 11 coopèrent l'une avec l'autre avec un léger jeu autorisant un pivotement du voile annulaire 15 par rapport au moyeu 11 autour d'un axe orthogonal à l'axe X. A titre d'exemple, l'angle maximum de pivotement du voile annulaire 15 par rapport au moyeu 11 est compris entre 0.5 et 5 °, de préférence de l'ordre de 1 à 2 dégrées .

Comme représenté sur la figure 3, le voile annulaire 15 présente une portion interne qui est en appui vers l'arrière contre la collerette 13 du moyeu 11. En outre, le voile annulaire 15 est retenu axialement sur le moyeu 11 au moyen d'un flasque de fixation 22. Pour ce faire, le voile annulaire 15 et le flasque de fixation 22 sont respectivement disposés de part et d'autre de la collerette 13 du moyeu 11 et sont fixés l'un à l'autre de manière à pincer ladite collerette 13 entre les portions internes respectives du flasque de fixation 22 et du voile annulaire 15. Le flasque de fixation 22 comporte des trous 23 qui sont chacun en regard de l'un des trous 16 ménagés dans le voile annulaire 15. Des organes de fixation, tels que des rivets 15, passent chacun au travers d'un trou 16 ménagé dans le voile annulaire 15 et d'un trou 23 ménagé dans le flasque de fixation 22 de manière à solidariser en rotation le flasque de fixation au voile annulaire. De manière avantageuse, comme représenté sur les figures 1 à 3, le flasque de fixation 22 et le support annulaire 4 sont fixés au voile annulaire 15 par des rivets communs 19.

Par ailleurs, le flasque de fixation 22 comporte des orifices d'assouplissement 24 de forme oblongue dont la plus grande dimension est orientée selon la direction circonférentielle, tel que représenté sur la figure 2. De tels orifices d'assouplissement 24 permettent d'augmenter la flexibilité du flasque de fixation 22 et autorisent ainsi la portion interne du flasque de fixation 22 à prendre une forme sensiblement tronconique, telle qu'illustrée sur la figure 3. Dans un autre mode de réalisation, les orifices d'assouplissement ont une forme de S, par exemple telle que décrite dans la demande de brevet français numéro FR1562395.

La collerette 13 comporte sur sa face arrière une rampe 25 de forme tronconique contre laquelle vient en appui la portion interne 26, de forme tronconique, du flasque de fixation 22. La portion interne 26 du flasque de fixation 22 est apte à se déformer élastiquement, ce qui, en combinaison avec le jeu ménagé entre la denture 21 du voile annulaire 15 et la denture 14 de la périphérie externe du moyeu 11, autorise un basculement du voile annulaire 15 par rapport au moyeu 11, autour d'un axe orthogonal à l'axe X. Ceci permet de compenser les défauts d'alignement entre l'arbre menant et l'arbre mené, lors d'une opération d'embrayage.

Selon un mode de réalisation avantageux, la portion interne 26 du flasque de fixation 22 est initialement plane et se déforme élastiquement de manière à prendre une forme tronconique lors de l'assemblage du disque d'embrayage 1, c'est-à-dire lorsque le flasque de fixation 22 et le voile annulaire 15 sont positionnés de part et d'autre de la collerette 13 et fixés l'un à l'autre. De manière alternative, la portion interne 26 du flasque de fixation 22 peut subir une déformation préalable. En outre, dans un autre mode de réalisation non représenté, la portion interne 26 de forme tronconique du flasque de fixation 22 n'est pas continue et comporte une pluralité de pattes réparties autour de l'axe de rotation et séparées les unes des autres par des fentes, telles que décrites dans la demande FR2808850.

Comme illustré par exemple sur la figure 1, le flasque de fixation 22 et le support annulaire 4 sont à l'origine, issus d'une même tôle. Aussi, pour séparer la flasque de fixation 22 et le support annulaire 4, la tôle est découpée le long d'une ligne de découpe orientée circonférentiellement autour de l'axe central du flasque de fixation 22. En d'autres termes, le contour externe 27 du flasque de fixation 22 présente une forme complémentaire de celle du contour interne 28 du support annulaire 4. La ligne de découpe présente des ondulations périodiques de manière à former en alternance des portions en saillie 29, 30 et des renfoncements radiaux de formes complémentaires au niveau du contour interne 28 du support annulaire 4 et du contour externe 27 du flasque de fixation 22.

Chacune des portions en saillie 29, dirigées radialement vers l'extérieur, du flasque de fixation 22 présente un trou 23 pour assurer la fixation du flasque de fixation 22 sur le voile annulaire 15. De même, chacune des portions en saillie 30, dirigées radialement vers l'intérieur, du support annulaire 4 présente un trou 17.

Les trous 17, 23 sont régulièrement répartis autour de l'axe X et sont ménagés à une même distance radiale de l'axe X. Ainsi, comme représenté notamment sur les figures 2 et 3, le flasque de fixation 22 et le support annulaire 4 sont aptes à être positionnés axialement de part et d'autre du voile annulaire 16, dans une position relative dans laquelle chaque trou 23 ménagé dans le flasque de fixation 22 est en regard d'un trou 17 respectif ménagé dans le support annulaire 4 et d'un trou 16 ménagé dans le voile annulaire 15. Ainsi, le flasque de fixation 22 et le support annulaire 4 sont fixés au voile annulaire 15 par des organes de fixation communs, ici les rivets 19.

On observe en outre que, dans ce mode de réalisation, le voile annulaire 15 forme un élément d'entretoisement assurant l'écartement axial entre le flasque de fixation 22 et le support annulaire 4.

A titre d'exemple, la tôle permettant la fabrication du flasque de fixation 22 et du support annulaire 4 est en acier à ressort, tel que l'acier CS67S. Un tel acier comporte entre 0.65 % et 0.73 % de carbone. Cette tôle est avantageusement pré-traitée par un traitement thermique de trempe suivi d'un revenu.

Les figures 4 à 9 illustrent un disque d'embrayage 1 selon un deuxième mode de réalisation. Ce mode de réalisation diffère du disque d'embrayage 1 décrit en relation avec les figures 1 à 3 par la structure du support annulaire 4 et du flasque de fixation 22. En effet, dans ce mode de réalisation, le support annulaire 4 et le flasque de fixation 22 sont formés d'un seul tenant, ce qui permet de limiter le nombre de composants du disque d'embrayage 1.

Comme représenté sur les figures 4 et 5, la pièce monobloc formant le support annulaire 4 et le flasque de fixation 22 comporte une pluralité de fenêtres 31 régulièrement réparties autour de l'axe X et entre lesquelles s'étendent des bras de liaison 32 reliant la portion externe formant le support annulaire 4 et la portion interne formant le flasque de fixation 24. Les bras de liaison 32 sont pliés d'une manière telle que le support annulaire 4 et le flasque de fixation 22 s'étendent respectivement dans deux plans orthogonaux à l'axe X qui sont placés à distance axialement l'un de l'autre. Par ailleurs, la pièce monobloc comporte une pluralité de pattes de fixation 33 qui s'étendent dans le plan du support annulaire 4 et font saillie radialement vers l'intérieur, en regard de chacune des fenêtres 31. Chacune desdites pattes de fixation 33 présente un trou 17 pour assurer la fixation de la pièce monobloc sur le voile annulaire 15.

Par ailleurs, comme représenté sur les figures 8 et 9 illustrant deux étapes successives de l'assemblage du disque d'embrayage 1, le voile annulaire 15 comporte des pattes de fixation 34 qui font saillie radialement vers l'extérieur et sont chacune pourvues d'un trou 16. Comme on le voit sur la figure 8, le voile 15 et le support annulaire 4 sont placés dans un premier temps de sorte que les pattes de fixation 33 du support annulaire soient situés circonférentiellement entre les pattes de fixation 34 du voile. Dans un deuxième temps, comme représenté sur la figure 9, le voile et le support annulaire sont tournés l'un par rapport à l'autre et chacune des pattes de fixation 34 du voile annulaire 15 est introduite à l'intérieure d'une fenêtre 31 respective de la pièce monobloc et positionnée contre la face arrière de l'une des pattes de fixation 34 de la pièce monobloc. Des organes de fixation, tel que des rivets 19 notamment représentés sur la figure 6, sont positionnés au travers des trous 16, 17 des pattes de fixation 34, 33 du voile annulaire 15 et de la pièce monobloc de manière à fixer ladite pièce monobloc au voile annulaire 15. Ainsi, comme représenté par exemple sur les figures 6 et 7, le voile annulaire 15 est disposé axialement entre la portion interne de la pièce monobloc formant le support annulaire 4 et la portion externe de la pièce monobloc formant le flasque de fixation 22. Dès lors, comme dans le mode de réalisation des figures 1 à 3, le voile annulaire 15 forme un élément d'entretoisement entre le support annulaire 4 et le flasque de fixation 22 et la garniture de friction 2 avant fait saillie vers l'avant au-delà de l'extrémité avant du moyeu 11. Dans un mode de réalisation non représenté, le corps des organes de fixation 19 peut venir de matière avec le voile, par exemple après un emboutissage du voile 15.

La figure 10 illustre un disque d'embrayage 1 selon un troisième mode de réalisation. Ce mode de réalisation diffère du mode de réalisation décrit en relation avec les figures 1 à 3 par la structure des organes de fixation 35 assurant la fixation du support annulaire 4 et du flasque de fixation 22 au voile annulaire 15. En effet, dans ce mode de réalisation, les organes de fixation 35 présentent une portion intermédiaire 36 qui est disposée axialement entre le support annulaire 4 et le voile annulaire 15 et qui forme ainsi un élément d'entretoisement écartant axialement le support annulaire 4 du voile annulaire 15. Ceci permet d'espacer encore davantage les garnitures de friction 2, 3 vers l'avant par rapport au moyeu 11. Dans le mode de réalisation représenté, les organes de fixation 35 sont de rivets qui présentent une portion intermédiaire 36 disposée entre le support annulaire 4 et le voile annulaire 15 et deux tiges 37, 38 qui font saillie axialement de la portion intermédiaire 36 et dont l'extrémité est boutterolée afin de former une tête de rivet 39, 40. L'une de tiges 37 fait saillie vers l'avant et passe au travers d'un trou 17 ménagé dans le support annulaire 4 et l'autre des tiges 38 fait saillie vers l'arrière et passe au travers d'un trou 16 ménagé dans le voile annulaire 15 et d'un trou 23 ménagé dans le flasque de fixation 22.

La figure 11 illustre un disque d'embrayage 1 selon un quatrième mode de réalisation. Ce disque d'embrayage 1 diffère du disque d'embrayage de la figure 10 en ce que le support annulaire 4 est décalé vers l'arrière par rapport au voile annulaire 15. Aussi, dans un tel mode de réalisation, seule la portion intermédiaire 36 des organes de fixation 35 qui forme élément d'entretoisement est disposée axialement entre le flasque de fixation 22 et le support annulaire 4. Ainsi, la tige 37 qui fait saillie vers l'avant passe au travers d'un trou 23 ménagé dans le flasque de fixation 22 et d'un trou 16 ménagé dans le voile annulaire 15 alors que la tige 38 qui fait saillie vers l'arrière passe au travers d'un trou 17 ménagé dans le support annulaire 4. Un tel agencement est avantageux lorsque le disque d'embrayage 1 est destiné à une transmission dans laquelle, pour des raisons d'encombrement d'autres éléments de la chaîne de transmission, les garnitures de frictions 2, 3 doivent être décalées vers l'arrière par rapport au voile annulaire 15.

Les figures 12 à 14 illustrent un disque d'embrayage selon un cinquième mode de réalisation. Ce mode de réalisation diffère du mode de réalisation décrit ci-dessus en relation avec les figures 4 à 9 en ce que les deux plans orthogonaux à l'axe X dans lesquels s'étendent respectivement le support annulaire 4 et le flasque de fixation 22 sont encore davantage espacés axialement l'un de l'autre. Pour ce faire, les organes de fixation 35 permettant de fixer les pattes de fixation 33 de la pièce monobloc aux pattes de fixation 34 du voile annulaire 15 comportent chacun une portion intermédiaire 36 formant entretoise qui est disposée entre l'une des pattes de fixation 33 de la pièce monobloc et l'une des pattes de fixation 34 du voile annulaire 15. Les organes de fixation 35 sont plus particulièrement des rivets qui présentent une portion intermédiaire 36 disposée entre l'une des pattes de fixation 33 de la pièce monobloc et l'une des pattes de fixation 34 du voile annulaire 15 et deux tiges 37, 38 qui font saillie axialement de la portion intermédiaire 36 et dont l'extrémité est bouterollée afin de former une tête de rivet 39, 40. L'une de tiges 37 fait saillie vers l'avant et passe au travers d'un trou 17 ménagé dans l'une des pattes de fixation 33 de la pièce monobloc et l'autre des tiges 38 fait saillie vers l'arrière et passe au travers d'un trou 16 ménagé dans l'une des pattes de fixation 34 du voile annulaire 15. Nous observons sur les figures 13 et 14 qu'un tel agencement permet d'obtenir un disque d'embrayage dans lequel les garnitures de fiction 2, 3 s'étendent en intégralité au-delà de de l'extrémité avant du moyeu 11.

Si on le souhaite, le flasque de fixation 22 peut être plaqué contre le voile 15 avec des organes de fixation additionnels, tels que des rivets, non illustrés.

En l'absence de rivetage du flasque de fixation 22 au voile 15, on peut favoriser un mouvement de flexion ou de torsion des bras et une déformation axiale du flasque de fixation, notamment de sa portion radialement externe. Le dimensionnement et la géométrie des bras 32 et des fenêtres 31 peuvent être modifiés pour favoriser le découplage entre le flasque de fixation 22 et le support annulaire 4 et ajuster l'effort de serrage exercé par le flasque de fixation 22 contre la collerette 13.

Enfin, les figures 15 à 17 illustrent un disque d'embrayage 1 selon un sixième mode de réalisation. Ce disque d'embrayage 1 diffère du mode de réalisation décrit ci-dessus en relation avec les figures 12 à 14 en ce que le plan, orthogonal à l'axe X, dans lequel s'étend le support annulaire 4 est décalé vers l'arrière par rapport au voile annulaire 15. Aussi, dans un tel mode de réalisation, le support annulaire 4 et le flasque de fixation 22 sont disposés du même côté du voile annulaire 15 et seule la portion intermédiaire 36 des organes de fixation 35 qui forme un élément d'entretoisement est disposée axialement entre le flasque de fixation 22 et le support annulaire 4. En outre, la tige 37 qui fait saillie vers l'avant passe au travers d'un trou 16 ménagé dans l'une des pattes de fixation 34 du voile annulaire 15 alors que la tige 38 qui fait saillie vers l'arrière passe au travers d'un trou 17 ménagé dans l'une des pattes de fixation 33 du support annulaire 4.

Bien que l'invention ait été décrite en liaison avec plusieurs modes de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Disque d'embrayage (1) comportant :
- un moyeu (11) ayant un axe central X, apte à être solidarisé en rotation à un arbre mené, le moyeu (11) comportant une périphérie externe présentant un élément en saillie (13) dirigé radialement vers l'extérieur ;
- un voile annulaire (15) qui est solidaire en rotation du moyeu (11) et qui présente une portion interne en appui contre l'élément en saillie (13) ;
- des garnitures de friction (2, 3) fixées sur une portion externe (5) d'un support annulaire (4) ; ledit support annulaire (4) étant fixé au voile annulaire (15) ;
- un flasque de fixation (22) qui présente une portion interne (26) en appui contre l'élément en saillie (13), le flasque de fixation et le voile annulaire (15) étant disposés de part et d'autre de l'élément en saillie (13) et solidarisés l'un à l'autre de manière à pincer l'élément en saillie (13) entre les portions internes respectives du flasque de fixation (22) et du voile annulaire (15) et retenir ainsi axialement le voile annulaire (15) au moyeu (11) ;
- la portion externe (5) du support annulaire (4) étant espacée axialement de la portion interne du flasque de fixation (22) ;
- le support annulaire (4) et le flasque de fixation (22) étant au moins en partie formés d'une seule pièce monobloc ou formés de deux pièces distinctes présentant respectivement un contour interne (28) et un contour externe (27) qui présentent des formes telles que, dans un état désassemblé du disque d'embrayage, le support annulaire (4) et le flasque de fixation (22) soient aptes à être positionnés dans une position relative dans laquelle le contour externe (27) du flasque de fixation (22) se situe radialement à l'intérieur du contour interne (28) du support annulaire (4),
**caractérisé par**
- un ou plusieurs éléments d'entretoisement (15, 36) disposés axialement entre le support annulaire (4) et le flasque de fixation (22) de manière à les espacer axialement.

2. Disque d'embrayage (1) selon la revendication 1, dans lequel le voile annulaire (15) forme un élément d'entretoisement disposé entre le support annulaire (4) et le flasque de fixation (22).

3. Disque d'embrayage (1) selon l'une quelconque des revendications 1 à 2, dans lequel le support annulaire (4) est fixé au voile annulaire (15) par une pluralité d'organes de fixations (19, 35).

4. Disque d'embrayage (1) selon la revendication 3, dans lequel chaque organe de fixation (35) comporte une portion intermédiaire (36) formant un élément d'entretoisement disposé axialement entre le support annulaire (4) et le flasque de fixation (22).

5. Disque d'embrayage (1) selon la revendication 4, dans lequel les organes de fixation (35) sont des rivets comportant chacun deux tiges (37, 38) faisant saillie axialement de la portion intermédiaire (36) et passant respectivement au travers d'un trou (16) ménagé dans le voile annulaire (15) et d'un trou (17) ménagé dans le support annulaire (4), chaque tige (37, 38) comportant une extrémité opposée à la portion intermédiaire ayant une tête, par exemple sertie, la tête ayant une section plus grande que le trou dans lequel passe la tige correspondante de façon à maintenir axialement le voile (15) et le support annulaire (4) chacun entre l'une des têtes et la portion intermédiaire.

6. Disque d'embrayage (1) selon la revendication 4 ou 5, dans lequel le voile annulaire (15) et les portions intermédiaires (36) des organes de fixation (35) sont disposés axialement entre le support annulaire (4) et le flasque de fixation (22).

7. Disque d'embrayage (1) selon l'une quelconque des revendications 3 à 6, dans lequel le support annulaire (4) et le flasque de fixation (22) sont deux pièces distinctes et présentent respectivement un contour interne (28) et un contour externe (27) qui présentent des formes telles que, dans un état désassemblé du disque d'embrayage, le support annulaire (4) et le flasque de fixation (22) soient aptes à être positionnés dans une position relative dans laquelle le contour externe (27) du flasque de fixation (22) se situe radialement à l'intérieur du contour interne (28) du support annulaire (4) et dans lequel le flasque de fixation (22) est fixé au support annulaire (4) par les organes de fixation (19, 35) assurant la fixation du support annulaire (4) au voile annulaire (15).

8. Disque d'embrayage (1) selon l'une quelconque des revendications 1 à 6, dans lequel le support annulaire (4) et le flasque de fixation (22) sont au moins en partie formés d'une seule pièce monobloc, le support annulaire (4) et le flasque de fixation (22) étant reliés l'un à l'autre par l'intermédiaire d'une pluralité de bras de liaison (32) qui sont venus de matière avec au moins une partie du flasque de fixation et une partie du support annulaire et qui sont régulièrement répartis autour de l'axe X et séparés les uns des autres par des fenêtres (31), lesdits bras de liaison (32) étant pliés d'une manière telle que le support annulaire (4) est espacé axialement du flasque de fixation (22).

9. Disque d'embrayage (1) selon la revendication 8 prise en combinaison avec la revendication 3, dans lequel le support annulaire (4) comporte une pluralité de pattes de fixation (33) qui s'étendent chacune radialement vers l'intérieur, en regard de l'une des fenêtres (31), chacune des pattes de fixation (33) étant fixée au voile annulaire (15) par l'un des organes de fixation (19, 35).

10. Disque d'embrayage (1) selon la revendication 9, dans lequel le voile annulaire (15) comporte une pluralité de pattes de fixation (34) qui font saillie radialement vers l'extérieur, sont chacune introduites dans l'une des fenêtres (31) et sont chacune fixées à l'une des pattes de fixation (33) respective du support annulaire (4) par l'un des organes de fixation (19, 35).

11. Disque d'embrayage (1) selon l'une des revendications 8 à 10, dans lequel le flasque de fixation (22) est plaqué contre le voile annulaire (15) avec un moyen de fixation, notamment au moyen d'un organe de fixation additionnel tel qu'un rivet.

12. Disque d'embrayage (1) selon l'une quelconque des revendications 1 à 11, dans lequel l'élément en saillie est une collerette (13).

13. Disque d'embrayage (1) selon l'une quelconque des revendications 1 à 12, dans lequel la portion externe (5) du support annulaire (4) est espacée axialement de la portion interne (26) du flasque de fixation (22) d'une manière telle qu'au moins l'une des garnitures de friction (2, 3) soit positionnée au moins en partie axialement au-delà d'une extrémité axiale du moyeu (11).

14. Disque d'embrayage (1) selon l'une quelconque des revendications 1 à 13, dans lequel la portion interne (26) du flasque de fixation (22) présente une forme tronconique qui coopère avec une rampe (25) de forme tronconique de l'élément en saillie (13), la portion interne (26) du flasque de fixation (22) étant contrainte contre la rampe (25) de forme tronconique et étant apte à se déformer élastiquement de manière à autoriser un basculement du voile annulaire (15) par rapport au moyeu (11) autour d'un axe orthogonal à l'axe X.

## Patentansprüche

1. Kupplungsscheibe (1), welche aufweist:
- eine Nabe (11) mit einer Mittelachse X, die geeignet ist, drehfest mit einer getriebenen Welle verbunden zu werden, wobei die Nabe (11) einen Außenumfang aufweist, der ein radial nach außen gerichtetes vorstehendes Element (13) aufweist;
- eine ringförmige Flachscheibe (15), welche drehfest mit der Nabe (11) verbunden ist und welche einen inneren Abschnitt aufweist, der an dem vorstehenden Element (13) anliegt;
- Reibbeläge (2, 3), die an einem äußeren Abschnitt (5) eines ringförmigen Trägers (4) befestigt sind; wobei der ringförmige Träger (4) an der ringförmigen Flachscheibe (15) befestigt ist;
- einen Befestigungsflansch (22), welcher einen inneren Abschnitt (26) aufweist, der an dem vorstehenden Element (13) anliegt, wobei der Befestigungsflansch und die ringförmige Flachscheibe (15) auf beiden Seiten des vorstehenden Elements (13) angeordnet und fest miteinander verbunden sind, so dass sie das vorstehende Element (13) zwischen den jeweiligen inneren Abschnitten des Befestigungsflansches (22) und der ringförmigen Flachscheibe (15) festklemmen und somit die ringförmige Flachscheibe (15) axial an der Nabe (11) halten;
- wobei der äußere Abschnitt (5) des ringförmigen Trägers (4) vom inneren Abschnitt des Befestigungsflansches (22) axial beabstandet ist;
- wobei der ringförmige Träger (4) und der Befestigungsflansch (22) wenigstens teilweise von einem einzigen einstückigen Teil gebildet werden oder von zwei verschiedenen Teilen gebildet werden, die jeweils eine Innenkontur (28) und eine Außenkontur (27) aufweisen, welche solche Formen aufweisen, dass in einem zerlegten Zustand der Kupplungsscheibe der ringförmige Träger (4) und der Befestigungsflansch (22) in einer relativen Position positionierbar sind, in welcher sich die Außenkontur (27) des Befestigungsflansches (22) radial innerhalb der Innenkontur (28) des ringförmigen Trägers (4) befindet,
**gekennzeichnet durch** ein oder mehrere Distanzelemente (15, 36), die axial zwischen dem ringförmigen Träger (4) und dem Befestigungsflansch (22) angeordnet sind, so dass sie diese axial auf Abstand halten.

2. Kupplungsscheibe (1) nach Anspruch 1, wobei die ringförmige Flachscheibe (15) ein Distanzelement bildet, das zwischen dem ringförmigen Träger (4) und dem Befestigungsflansch (22) angeordnet ist.

3. Kupplungsscheibe (1) nach einem der vorhergehenden Ansprüche 1 bis 2, wobei der ringförmige Träger (4) an der ringförmigen Flachscheibe (15) durch mehrere Befestigungselemente (19, 35) befestigt ist.

4. Kupplungsscheibe (1) nach Anspruch 3, wobei jedes Befestigungselement (35) einen Zwischenabschnitt (36) aufweist, der ein axial zwischen dem ringförmigen Träger (4) und dem Befestigungsflansch (22) angeordnetes Distanzelement bildet.

5. Kupplungsscheibe (1) nach Anspruch 4, wobei die Befestigungselemente (35) Niete sind, die jeweils zwei Schäfte (37, 38) aufweisen, die vom Zwischenabschnitt (36) aus axial vorstehen und durch ein in der ringförmigen Flachscheibe (15) ausgebildetes Loch (16) bzw. ein in dem ringförmigen Träger (4) ausgebildetes Loch (17) hindurch verlaufen, wobei jeder Schaft (37, 38) ein dem Zwischenabschnitt gegenüberliegendes Ende mit einem Kopf, zum Beispiel einem Anpresskopf, aufweist, wobei der Kopf einen größeren Querschnitt als das Loch aufweist, durch das der entsprechende Schaft verläuft, so dass die Flachscheibe (15) und der ringförmige Träger (4) axial jeweils zwischen einem der Köpfe und dem Zwischenabschnitt gehalten werden.

6. Kupplungsscheibe (1) nach Anspruch 4 oder 5, wobei die ringförmige Flachscheibe (15) und die Zwischenabschnitte (36) der Befestigungselemente (35) axial zwischen dem ringförmigen Träger (4) und dem Befestigungsflansch (22) angeordnet sind.

7. Kupplungsscheibe (1) nach einem der Ansprüche 3 bis 6, wobei der ringförmige Träger (4) und der Befestigungsflansch (22) zwei verschiedene Teile sind und jeweils eine Innenkontur (28) und eine Außenkontur (27) aufweisen, welche solche Formen aufweisen, dass in einem zerlegten Zustand der Kupplungsscheibe der ringförmige Träger (4) und der Befestigungsflansch (22) in einer relativen Position positionierbar sind, in welcher sich die Außenkontur (27) des Befestigungsflansches (22) radial innerhalb der Innenkontur (28) des ringförmigen Trägers (4) befindet, und wobei der Befestigungsflansch (22) an dem ringförmigen Träger (4) durch die Befestigungselemente (19, 35) befestigt ist, welche die Befestigung des ringförmigen Trägers (4) an der ringförmigen Flachscheibe (15) sicherstellen.

8. Kupplungsscheibe (1) nach einem der Ansprüche 1 bis 6, wobei der ringförmige Träger (4) und der Befestigungsflansch (22) wenigstens teilweise von einem einzigen einstückigen Teil gebildet werden, wobei der ringförmige Träger (4) und der Befestigungsflansch (22) über mehrere Verbindungsarme (32) miteinander verbunden sind, welche mit wenigstens einem Teil des Befestigungsflansches und einem Teil des ringförmigen Trägers stoffschlüssig verbunden sind und welche um die Achse X herum gleichmäßig verteilt und durch Fenster (31) voneinander getrennt sind, wobei die Verbindungsarme (32) derart gebogen sind, dass der ringförmige Träger (4) von dem Befestigungsflansch (22) axial beabstandet ist.

9. Kupplungsscheibe (1) nach Anspruch 8 in Kombination mit Anspruch 3, wobei der ringförmige Träger (4) mehrere Befestigungslaschen (33) aufweist, welche sich jeweils radial nach innen erstrecken, gegenüber einem der Fenster (31), wobei jede der Befestigungslaschen (33) an der ringförmigen Flachscheibe (15) durch eines der Befestigungselemente (19, 35) befestigt ist.

10. Kupplungsscheibe (1) nach Anspruch 9, wobei die ringförmige Flachscheibe (15) mehrere Befestigungslaschen (34) aufweist, welche sich radial nach außen erstrecken, jeweils in eines der Fenster (31) eingeführt sind und jeweils an einer jeweiligen Befestigungslasche (33) des ringförmigen Trägers (4) durch eines der Befestigungselemente (19, 35) befestigt sind.

11. Kupplungsscheibe (1) nach einem der Ansprüche 8 bis 10, wobei der Befestigungsflansch (22) mit einem Befestigungsmittel, insbesondere mittels eines zusätzlichen Befestigungselements wie etwa eines Niets, gegen die ringförmige Flachscheibe (15) gepresst wird.

12. Kupplungsscheibe (1) nach einem der Ansprüche 1 bis 11, wobei das vorstehende Element ein Bund (13) ist.

13. Kupplungsscheibe (1) nach einem der Ansprüche 1 bis 12, wobei der äußere Abschnitt (5) des ringförmigen Trägers (4) vom inneren Abschnitt (26) des Befestigungsflansches (22) axial beabstandet ist, derart, dass wenigstens einer der Reibbeläge (2, 3) wenigstens teilweise axial jenseits eines axialen Endes der Nabe (11) positioniert ist.

14. Kupplungsscheibe (1) nach einem der Ansprüche 1 bis 13, wobei der innere Abschnitt (26) des Befestigungsflansches (22) eine Kegelstumpfform aufweist, welche mit einer kegelstumpfförmigen Rampe (25) des vorstehenden Elements (13) zusammenwirkt, wobei der innere Abschnitt (26) des Befestigungsflansches (22) gegen die kegelstumpfförmige Rampe (25) verspannt ist und geeignet ist, sich elastisch zu verformen, um so ein Schwenken der ringförmigen Flachscheibe (15) in Bezug auf die Nabe (11) um eine zur Achse X orthogonale Achse zu ermöglichen.

## Claims

1. Clutch disc (1) comprising:
- a hub (11) having a central axis X, which may be secured in rotation with a driven shaft, the hub (11) comprising an outer periphery having a projecting element (13) oriented radially outwards;
- an annular web (15) which is secured in rotation with the hub (11) and which has an inner portion that bears against the projecting element (13);
- friction linings (2, 3) attached to an outer portion (5) of an annular support (4); said annular support (4) being attached to the annular web (15);
- an attachment flange (22) which has an inner portion (26) bearing against the projecting element (13), the attachment flange and the annular web (15) being arranged on either side of the projecting element (13) and secured to one another so as to grip the projecting element (13) between the respective inner portions of the attachment flange (22) and of the annular web (15) and thus axially retain the annular web (15) on the hub (11) ;
- the outer portion (5) of the annular support (4) being spaced axially from the inner portion of the attachment flange (22);
- the annular support (4) and the attachment flange (22) being at least partially formed from a single solid piece or formed from two distinct pieces having respectively an inner contour (28) and an outer contour (27), which have shapes such that, in a disassembled state of the clutch disc, the annular support (4) and the attachment flange (22) are able to be positioned in a relative position in which the outer contour (27) of the attachment flange (22) is located radially inside the inner contour (28) of the annular support (4),
**characterized by**
- one or more spacer elements (15, 36) located axially between the annular support (4) and the attachment flange (22) so as to space these apart axially.

2. Clutch disc (1) according to Claim 1, in which the annular web (15) forms a spacer element located between the annular support (4) and the attachment flange (22).

3. Clutch disc (1) according to either one of Claims 1 and 2, in which the annular support (4) is attached to the annular web (15) by a plurality of fasteners (19, 35).

4. Clutch disc (1) according to Claim 3, in which each fastener (35) comprises an intermediate portion (36) that forms a spacer element located axially between the annular support (4) and the attachment flange (22) .

5. Clutch disc (1) according to Claim 4, in which the fasteners (35) are rivets which each comprise two stems (37, 38) projecting axially from the intermediate portion (36) and passing respectively through a hole (16) created in the annular web (15) and a hole (17) created in the annular support (4), each stem (37, 38) comprising an end oriented away from the intermediate portion having a head, which is for example set, the head having a cross section that is larger than the hole into which passes the corresponding stem, so as to axially hold each of the web (15) and the annular support (4) between one of the heads and the intermediate portion.

6. Clutch disc (1) according to Claim 4 or 5, in which the annular web (15) and the intermediate portions (36) of the fasteners (35) are located axially between the annular support (4) and the attachment flange (22).

7. Clutch disc (1) according to any one of Claims 3 to 6, in which the annular support (4) and the attachment flange (22) are two distinct pieces and have respectively an inner contour (28) and an outer contour (27) which have shapes such that, in a disassembled state of the clutch disc, the annular support (4) and the attachment flange (22) are able to be positioned in a relative position in which the outer contour (27) of the attachment flange (22) is located radially inside the inner contour (28) of the annular support (4), and in which the attachment flange (22) is attached to the annular support (4) by the fasteners (19, 35), thus attaching the annular support (4) to the annular web (15).

8. Clutch disc (1) according to any one of Claims 1 to 6, in which the annular support (4) and the attachment flange (22) are at least partially formed from a single solid piece, the annular support (4) and the attachment flange (22) being connected to one another via the intermediary of a plurality of connecting arms (32) which are integral with at least part of the attachment flange and part of the annular support, and which are regularly distributed about the axis X and are separated from one another by windows (31), said connecting arms (32) being bent in such a way that the annular support (4) is axially spaced apart from the attachment flange (22).

9. Clutch disc (1) according to Claim 8 in combination with Claim 3, in which the annular support (4) comprises a plurality of attachment tabs (33) which each extend radially inwards, facing one of the windows (31), each one of the attachment tabs (33) being attached to the annular web (15) by one of the fasteners (19, 35).

10. Clutch disc (1) according to Claim 9, in which the annular web (15) comprises a plurality of attachment tabs (34) that project radially outwards, are each introduced into one of the windows (31) and are each attached to a respective one of the attachment tabs (33) of the annular support (4) by one of the fasteners (19, 35).

11. Clutch disc (1) according to one of Claims 8 to 10, in which the attachment flange (22) is clamped against the annular web (15) with an attachment means, in particular by means of an additional fastener such as a rivet.

12. Clutch disc (1) according to any one of Claims 1 to 11, in which the projecting element is a collar (13).

13. Clutch disc (1) according to any one of Claims 1 to 12, in which the outer portion (5) of the annular support (4) is spaced axially apart from the inner portion (26) of the attachment flange (22) in such a way that at least one of the friction linings (2, 3) is positioned at least partially axially beyond an axial end of the hub (11).

14. Clutch disc (1) according to any one of Claims 1 to 13, in which the inner portion (26) of the attachment flange (22) has a frustoconical shape that cooperates with a frustoconical ramp (25) of the projecting element (13), wherein the inner portion (26) of the attachment flange (22) is pressed against the frustoconical ramp (25) and is able to deform elastically so as to allow the annular web (15) to tilt with respect to the hub (11) about an axis orthogonal to the axis X.
